# EUROPÄISCHE PATENTANMELDUNG

(11) **EP 4 425 821 A1**
(43) Veröffentlichungstag der Anmeldung: **04.09.2024**
(21) Anmeldenummer: 23159043.1
(22) Anmeldetag: 28.02.2023
(51) Int. Cl.: H04L 9/08, H04L 9/32

(54) **VORHER VEREINBARTEN GETEILTEN SYMMETRISCHEN KRYPTOGRAPHISCHEN SCHLÜSSELS VERWENDBAR ZUM EINRICHTEN EINES SITZUNGSSCHLÜSSELS**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft ein erstes Gerät ausgebildet für ein Einrichten eines vorher vereinbarten geteilten symmetrischen kryptographischen Schlüssels (ePSK), welcher in einem getrennten Protokollablauf verwendbar zum Einrichten eines Sitzungsschlüssels zum kryptographischen Schutz einer Kommunikation zwischen dem ersten Gerät (N1) und einem zweiten Gerät (N2), ist.

Außerdem betrifft die Erfindung eine zugehörige Schlüsselverwaltungseinheit (KSM) und ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein erstes Gerät ausgebildet für ein Einrichten eines vorher vereinbarten geteilten symmetrischen kryptographischen Schlüssels, welcher in einem getrennten Protokollablauf verwendbar zum Einrichten eines Sitzungsschlüssels zum kryptographischen Schutz einer Kommunikation zwischen dem ersten Gerät und einem zweiten Gerät, ist.

Außerdem betrifft die Erfindung eine zugehörige Schlüsselverwaltungseinheit (KSM) und ein zugehöriges Verfahren.

### Beschreibung des Stands der Technik

Zur kryptographisch geschützten Kommunikation zwischen zwei Teilnehmern können Protokolle wie insbesondere TLS, DTLS, QUIC oder IPsec/IKEv2 verwendet werden. Dazu erfolgt zuerst eine Authentisierung und Schlüsselvereinbarung (AKA, authentication and key agreement), bei der sich die Teilnehmer authentisieren (mutual authentication) oder zumindest einseitig authentisieren (unilateral authentication). Weiterhin ist auch eine unauthentisierte Schlüsselvereinbarung möglich, auch wenn dies in der Praxis eher in Sonderfällen relevant ist. Bei der Authentisierung und Schlüsselvereinbarung wird symmetrisches Schlüsselmaterial (Sitzungsschlüssel) eingerichtet, das zum kryptographischen Schutz (einer Verschlüsselung, einem Integritätsschutz und/oder einer Authenticated Encryption) von übertragenen Nutzerdaten zwischen Teilnehmern verwendet wird.

Manche Empfehlungen zur Nutzung von Postquantum- (PQ-) kryptographischen Algorithmen, z.B. vom Bundesamt für Sicherheit in der Informationstechnik (BSI) oder von der Agence nationale de la sécurité des systèmes d'information (ANSSI), fordern grundsätzlich hybride kryptographische Verfahren, bei denen ein PQ-Algorithmus zusammen mit einem herkömmlichen Algorithmus verwendet wird. Siehe BSI: Migration to Post Quantum Cryptography, Recommendations for action by the BSI, 31.05.2021, Abschnitt 3.5: "Therefore, the BSI does not recommend using post-quantum cryptography alone, but only "hybrid" if possible, i.e. in combination with classical algorithms. In a hybrid key exchange, for example, the two negotiated secrets must be combined by means of a suitable key derivation function to form a session key. In high-security applications, the BSI requires the use of hybrid solutions." Die Kombination soll sicher sein, soweit zumindest einer der verwendeten kryptographischen Algorithmen nicht gebrochen ist (z.B. durch einen Quantencomputer oder durch eine algorithmische Design-Schwäche oder durch ein Implementierungsproblem). Die Anwendung eines Hybridverfahrens bei jeder einzelnen Durchführung eines Authentisierungs- und Schlüsselvereinbarungsprotokolls ist jedoch aufwendig.

Einen Überblick über PQ-Kryptographie gibt BSI, Quantum-safe cryptography - fundamentals, current developments and recommendations, Okt. 2021. Darin ist in Abschnitt 3.1.1 "Key agreement" eine hybride Schlüsselvereinbarung beschrieben, in Abschnitt 3.1.2 "Hybrid signatures and adaptation of public key infrastructures" ist eine Mehrfachsignatur einer Nachricht beschrieben (message authentication).

Innerhalb eines Authentisierungs- und Schlüsselvereinbarungs-Protokollablaufs zwischen zwei Knoten erfolgen bei hybriden Schlüsselvereinbarungsprotokollen zwei kryptographisch unterschiedliche Schlüsselvereinbarungen, aus denen jeweils ein Sitzungsschlüssel resultiert, aus denen dann ein Gesamtsitzungsschlüssel zum Schutz von übertragenen Nutzerdaten gebildet wird. Dies erfolgt jedoch in einem aus Protokollsicht (IKEv2-AKA, TLS-AKA) einzelnen Protokollablauf.

Die Aufgabe der Erfindung besteht darin, eine Lösung verwendbar für eine sicherere und weniger aufwendige kryptographisch geschützte Kommunikation bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein erstes Gerät,
ausgebildet eine erste Authentisierung, eine erste Schlüsselvereinbarung, eine zweite Authentisierung und eine zweite Schlüsselvereinbarung durchzuführen,
wobei dem ersten Gerät ein erstes digitales Authentisierungszertifikat zugehörig ist,
aufweisend:
   - Eine erste Authentisierungseinheit, ausgebildet die erste Authentisierung durchzuführen, wobei die erste Authentisierung umfasst, das erste digitale Authentisierungszertifikat bereitzustellen, wobei das erste digitales Authentisierungszertifikat verwendbar ist, um eine Authentizität des ersten Geräts zu prüfen,
   - eine erste Schlüsselvereinbarungseinheit, ausgebildet die erste Schlüsselvereinbarung in Abhängigkeit eines ersten Ergebnisses der ersten Authentisierung durchzuführen, wobei die erste Schlüsselvereinbarung umfasst, einen ersten Schlüssel einzurichten,
      wobei der erste Schlüssel als ein vorher vereinbarter geteilter symmetrischer kryptographischer Schlüssel ausgebildet ist, wobei dem ersten Schlüssel ein zweites digitales Authentisierungszertifikat zugehörig ist, wobei das zweite digitale Authentisierungszertifikat ausgebildet ist, in der zweiten Authentisierung von dem ersten Gerät verwendet zu werden,
   - eine zweite Authentisierungseinheit, ausgebildet die zweite Authentisierung durchzuführen, wobei die zweite Authentisierung umfasst, ein zweites Gerät durch das zweite digitale Authentisierungszertifikat zu authentisieren (wobei die zweite Authentisierung somit umfasst, eine Authentizität des zweiten Geräts zu prüfen),
   - eine zweite Schlüsselvereinbarungseinheit, ausgebildet eine zweite Schlüsselvereinbarung in Abhängigkeit eines zweiten Ergebnisses der zweiten Authentisierung durchzuführen, wobei die zweite Schlüsselvereinbarung umfasst, zumindest einen zweiten Schlüssel einzurichten,
      wobei der zweite Schlüssel ausgebildet ist, als ein Sitzungsschlüssel zum kryptographischen Schutz einer Kommunikation zwischen dem ersten Gerät und dem zweiten Gerät.

Der erste Schlüssel, ausgebildet als der vorher vereinbarte geteilte symmetrische kryptographische Schlüssel, ist auch als ein Pre-Shared Key (PSK) oder external PSK zu verstehen.

Die erste Authentisierung gemeinsam mit der ersten Schlüsselvereinbarung, sowie die zweite Authentisierung gemeinsam mit der zweiten Schlüsselvereinbarung sind jeweils als eine "erste Authentisierung und Schlüsselvereinbarung" (erste AKA, engl. first authentication and key agreement) sowie "zweite Authentisierung und Schlüsselvereinbarung" (zweite AKA, engl. authentication and key agreement) bezeichenbar. Ebenso wird der Begriff "Authentisierung und Schlüsselvereinbarung Protokollablauf" bzw. "AKA-Protokollablauf" verwendet.

Ein Aspekt der Erfindung besteht darin, dass ein erster initialer authentisierter Authentisierungs- und Schlüsselvereinbarungs-Protokollablauf dazu dient, für einen zweiten nachfolgenden authentisierten Authentisierungs- und Schlüsselvereinbarungs-Protokollablauf einen symmetrischen Pre-Shared Key PSK (external PSK) zu ermitteln.

Das erste Gerät ist auch als ein erster Kommunikationspartner und/oder ein erster Knoten zu verstehen. Entsprechendes gilt für das zweite Gerät und alle weiteren Geräte (ein drittes Gerät, ein viertes Gerät,...).

Die erste Authentisierung und die erste Schlüsselvereinbarung erfolgen durch das erste Gerät und eine weitere Einheit. Die weitere Einheit ist insbesondere das zweite Gerät, mit dem auch die zweite Authentisierung und die zweite Schlüsselvereinbarung erfolgt oder eine weitere Einheit wie ein Schlüsselverwaltungsserver, auch als Key-Management-Server bezeichenbar.

Die erste Authentisierung ist durch das digitale Authentisierungszertifikat des ersten Geräts authentisiert. Die erste Authentisierung umfasst, das erste digitale Authentisierungszertifikat bereitzustellen, wobei das erste digitales Authentisierungszertifikat verwendbar ist, um eine Authentizität des ersten Geräts zu prüfen. Das Prüfen der Authentizität des ersten Geräts wird dabei von einer Einheit vorgenommen, welcher das erste digitale Authentisierungszertifikat bereitgestellt wird. Dabei handelt es sich insbesondere um das zweite Gerät oder um eine weitere Einheit wie ein Schlüsselverwaltungsserver.

"Einzurichten" ist auch als "auszuhandeln", "zu generieren", "zu ermitteln", "bereitzustellen" und/oder "zu vereinbaren" zu verstehen. "Einzureichen" umfasst insbesondere "abzuleiten" und/oder "zuzuweisen". Einrichten umfasst außerdem insbesondere ein zufälliges und ein deterministisches Einrichten. Das "Einrichten" findet insbesondere auch durch ein vorheriges Empfangen von kryptographischen Schlüsselmaterial statt.

Der erste Schlüssel ist aus einem weiteren Sitzungsschlüssel (unterschiedlich zu dem zweiten Schlüssel, welcher auch als Sitzungsschlüssel ausgebildet ist; auch als "Session Key" bezeichenbar) des ersten (initialen) AKA-Protokollablaufs durch eine Schlüsselableitungsfunktion ableitbar. Ebenso ist es möglich, dass der erste Schlüssel, der externe PSK, explizit zugewiesen wird unter Nutzung von sicherer Nutzerdatenübertragung des ersten Geräts und seinem Kommunikationspartner (insbesondere das zweite Gerät oder eine weitere Einheit) des ersten (initialen) Authentisierungs- und Schlüsselvereinbarungs-Protokollablaufs.

In der zweiten Authentisierung wird das zweite Authentisierungszertifikat des ersten Schlüssels von dem ersten Gerät verwendet, um das zweite Gerät zu authentisieren.

Die Kommunikation zwischen dem ersten Gerät und dem zweiten Gerät umfasst insbesondere ein Übertragen von Nutzerdaten von dem ersten zu dem zweiten Gerät oder umgekehrt oder ein bidirektionales Übertragen von Nutzerdaten zwischen dem ersten und dem zweiten Gerät.

Die erste Schlüsselvereinbarung wird in Abhängigkeit des ersten Ergebnisses der ersten Authentisierung durchgeführt. Die erste Schlüsselvereinbarung setzt insbesondere eine erfolgreiche erste Authentisierung voraus. Das heißt die erste Schlüsselvereinbarung erfolgt nur (wird nur vorgenommen), wenn die erste Authentisierung erfolgreich war, d.h. wenn eine gültige Authentisierung stattgefunden hat. Entsprechendes gilt für die zweite Schlüsselvereinbarung und die zweite Authentisierung. Insbesondere ist das erste Ergebnis und/oder das zweite Ergebnis in den Varianten "positiv" und "negativ" ausprägbar.

Ein Aspekt der Erfindung besteht somit darin, dass unterschiedlichen kryptographische Verfahren nicht in einem hybriden kryptographischen Schlüsselvereinbarungsverfahren kombiniert werden, sondern es werden mehrere aus Protokollsicht eigenständige Authentisierungs- und Schlüsselvereinbarungs-Protokollabläufe kombiniert. Dieser Ansatz hat den Vorteil, dass keine hybriden Schlüsselvereinbarungsverfahren implementiert werden müssen, da ein einzelner erster (initialer) authentisierter Authentisierungs- und Schlüsselvereinbarungs-Protokollablauf für eine Mehrzahl von zweiten authentisierten Authentisierungs- und Schlüsselvereinbarungs-Protokollabläufen verwendet werden kann. Dadurch ist diese Lösung effizienter, insbesondere auf batteriebetriebenen IoT-Geräten (geringere Rechenleistung, geringere Menge zu übertragender Daten, geringerer Stromverbrauch).

Es erfolgen also zumindest zwei aus Protokollsicht entkoppelte AKA-Protokollabläufe, bei denen ein PQ-sicherer AKA-Protokollablauf nur initial (erster Ablauf) oder gelegentlich erfolgt, um einen external PSK-Schlüssel einzurichten, der dann wiederholt bei einem effizienteren authentisierten AKA-Protokollablauf (zweiter Authentisierungs- und Schlüsselvereinbarungs-Protokollablauf) als external PSK Schlüssel verwendet wird. Der external PSK-Schlüssel wird vorzugsweise in einem durch zumindest ein digitales Authentisierungszertifikat authentisierten AKA-Protokollablauf zur Einrichtung eines Sitzungsschlüssels verwendet.

In einer weiteren Weiterbildung der Erfindung gilt für das erste Gerät, dass:
die erste Authentisierungseinheit außerdem ausgebildet ist, ein positives erstes Ergebnis der ersten Authentisierung bereitzustellen, und wobei
die erste Schlüsselvereinbarungseinheit ausgebildet ist, die erste Schlüsselvereinbarung unter Voraussetzung des positiven ersten Ergebnisses durchzuführen,
und/oder
die zweite Authentisierungseinheit außerdem ausgebildet ist, ein positives zweites Ergebnis der zweiten Authentisierung bereitzustellen, und wobei
die zweite Schlüsselvereinbarungseinheit ausgebildet ist, die zweite Schlüsselvereinbarung unter Voraussetzung des positiven zweiten Ergebnisses durchzuführen.

Insbesondere ist die erste Schlüsselvereinbarungseinheit ausgebildet, die erste Schlüsselvereinbarung nur bei einem positiven ersten Ergebnis durchzuführen und somit den ersten Schlüssel, welchem das zweite digitale Authentisierungszertifikat zugehörig ist und von dem ersten Gerät in der zweiten Authentisierung verwendbar ist, nur dann einzurichten, wenn das erste Gerät erfolgreich durch das erste digitale Authentisierungszertifikat authentisierbar ist.

Alternativ ist die erste Schlüsselvereinbarungseinheit insbesondere ausgebildet, die erste Schlüsselvereinbarung in Abhängigkeit des ersten Ergebnisses und unter Einbezug einer ersten Schlüsselvereinbarungs-Richtlinie durchzuführen und somit den ersten Schlüssel nur dann einzurichten, wenn das erste Ergebnis der ersten Schlüsselvereinbarungs-Richtlinie genügt.

Insbesondere ist die zweite Schlüsselvereinbarungseinheit, ausgebildet, die zweite Schlüsselvereinbarung nur bei einem positiven zweiten Ergebnis durchzuführen und somit den zweiten Schlüssel, welcher als der Sitzungsschlüssel zum kryptographischen Schutz der Kommunikation, insbesondere zum Übertragen von Nutzerdaten, zwischen dem ersten Gerät und dem zweiten Gerät verwendbar ist, nur dann einzurichten, wenn das zweite Gerät durch das zweite digitale Authentisierungszertifikat erfolgreich authentisierbar ist.

Alternativ ist die zweite Schlüsselvereinbarungseinheit insbesondere ausgebildet, die zweite Schlüsselvereinbarung in Abhängigkeit des zweiten Ergebnisses und unter Einbezug einer zweiten Schlüsselvereinbarungs-Richtlinie durchzuführen und somit den zweiten Schlüssel nur dann einzurichten, wenn das zweite Ergebnis der zweiten Schlüsselvereinbarungs-Richtlinie genügt.

Alternativ oder zusätzlich ist auch eine erste Prüfeinheit und/oder eine zweite Prüfeinheit als Komponenten des ersten Geräts umsetzbar. Die erste Prüfeinheit ist ausgebildet, die erste Authentisierung zu prüfen und die erste Schlüsselvereinbarung in Abhängigkeit eines Ergebnisses des Prüfens zuzulassen. Entsprechendes gilt für die zweite Prüfeinheit.

In einer weiteren Weiterbildung der Erfindung umfasst die erste Authentisierung durch die erste Authentisierungseinheit, außerdem das zweite Gerät durch ein drittes digitales Authentisierungszertifikat zu authentisieren, wobei das dritte digitale Authentisierungszertifikat dem zweiten Gerät zugehörig ist. Dies ist vorteilhaft, wenn das zweite Gerät über zwei Authentisierungszertifikate verfügt, die jeweils einen öffentlichen Authentisierungsschlüssel des zweiten Geräts bestätigen, jedoch für unterschiedliche kryptographische Authentisierungsalgorithmen. Bei der ersten Authentisierung kann das dritte Authentisierungszertifikat zur Authentisierung des zweiten Geräts verwendet werden.

Hierfür wird das dritte digitale Authentisierungszertifikat empfangen und durch dieses eine Authentizität des zweiten Geräts geprüft. Die erste Authentisierungseinheit ist somit außerdem ausgebildet, das dritte digitale Authentisierungszertifikat von dem zweiten Gerät zu empfangen und eine Authentizität des zweiten Geräts anhand des dritten digitalen Authentisierungszertifikats zu prüfen. Das dritte digitale Authentisierungszertifikat ist insbesondere gleich dem zweiten digitale Authentisierungszertifikat, welches dem ersten Schlüssel zugehörig ist. Dies ist vorteilhaft, wenn das zweite digitale Authentisierungszertifikat, das mit dem dritten digitale Authentisierungszertifikat übereinstimmt, ein digitales Authentisierungszertifikat ist, das eine Mehrzahl von öffentlichen Authentisierungsschlüsseln des zweiten Geräts bestätigt. Ein solches Zertifikat kann auch als Hybridzertifikat oder als Kombinationszertifikat bezeichnet werden. Es ist jedoch auch möglich, dass das zweite digitale Authentisierungszertifikat und das dritte digitale Authentisierungszertifikat unterschiedlich sind, aber einander zugeordnet werden können, z.B. anhand eines übereinstimmenten Subject-Attributs. Dies hat den Vorteil, dass für das zweite digitale Authentisierungszertifikat und das dritte digitale Authentisierungszertifikat herkömmliche Zertifikatsformate verwendbar sind, die jeweils genau einen öffentlichen Authentisierungsschlüssel des zweiten Geräts bestätigen.

Dies hat weiterhin den Vorteil, dass das zweite Gerät authentisiert wird, bevor der erste Schlüssel eingerichtet wird. Das dritte digitale Authentisierungszertifikat hat außerdem den Vorteil, dass es genutzt werden kann, um eine Verknüpfung, insbesondere durch Identifizierungsinformation, zum zweiten Gerät zu dem ersten Schlüssel zu erstellen. Das dritte digitale Authentisierungszertifikat kann dabei dazu verwendet werden, die Identität des zweiten Geräts manipulationsgeschützt zu ermitteln, der der eingerichtete external PSK-Schlüssel zugeordnet ist. Das erste Gerät verwendet diesen eingerichteten external PSK-Schlüssel in einer Variante nur dann, wenn er das zweite Gerät anhand des zweiten digitalen Authentisierungszertifikats authentisieren kann und wenn die in den beiden digitalen Authentisierungszertifikaten enthaltene Identitäts-Angaben (Subject-Attribut) übereinstimmen.

In einer weiteren Weiterbildung der Erfindung ist dem ersten Schlüssel eine Identifizierungsinformation des zweiten Geräts zugehörig,
wobei die Identifizierungsinformation insbesondere ausgebildet ist als:
- das dritte digitale Authentisierungszertifikat und/oder
- ein Hash-Wert des dritten digitalen Authentisierungszertifikats und/oder
- ein Fingerprint des dritten digitalen Authentisierungszertifikats und/oder
- mindestens ein in dem dritten digitalen Authentisierungszertifikat enthaltener öffentliche Schlüssel und/oder
- ein abhängig von dem mindestens einen in dem dritten digitalen Authentisierungszertifikat enthaltenen öffentlichen Schlüssel gebildeter Hash-Wert und/oder Fingerprint.

Die erste zertifikatsbasierte Authentisierung dient erfindungsgemäß dazu, den externen PSK (ePSK) auf dem ersten Gerät einzurichten. Nach dieser Ausführungsform wird bei der ersten Authentisierung durch die erste Authentisierungseinheit vorzugsweise auch die Kommunikationsgegenseite (das zweite Gerät; der zweite Knoten) durch ein digitales (das dritte) Authentisierungszertifikat authentisiert. Nach dieser Ausführungsform wird dabei dem eingerichteten externen PSK (ePSK) außerdem eine Identifizierungsinformation des zweiten Geräts zugeordnet, die abhängig vom digitalen (dritten) Authentisierungszertifikat des zweiten Geräts ermittelt ist.

Über diese Identifizierungsinformation wird der eingerichtete externe PSK an das dritte Authentisierungszertifikat des zweiten Geräts gebunden, das dieses dann bei dem zweiten Authentisierungs- und Schlüsselvereinbarungs-Protokollablauf für seine Authentisierung verwendet. Dieser externe PSK (ePSK), der (zuvor) beim ersten authentisierten Authentisierungs- und Schlüsselvereinbarungs-Protokollablauf eingerichtet wurde, wird daher nur dann (von dem zweiten Gerät) verwendet beziehungsweise (von dem ersten Gerät) akzeptiert, wenn das zweite Gerät bei dem zweiten Authentisierungs- und Schlüsselvereinbarungsprotokollablauf das diesem externen PSK zugeordnete Authentisierungszertifikat für seine Authentisierung verwendet.

In anderen Worten: Bei dem ersten authentisierte Authentisierungs- und Schlüsselvereinbarungs-Protokollablauf wird auf dem ersten Gerät dem dabei ermittelten external PSK (ePSK) eine Nutzungsinformation zugeordnet, die abhängig von dem öffentlichen Schlüssel oder dem Authentisierungszertifikat des zweiten Geräts gebildet wird (insbesondere identisch oder ein Hash-Wert oder Fingerprint des öffentlichen Schlüssels oder des Authentisierungszertifikats des zweiten Geräts). Das erste Gerät verwendet diesen external PSK-Schlüssel nur, wenn er eine zweiten authentisierte Authentisierungs- und Schlüsselvereinbarungs-Protokollablauf durchführt, bei dem sich der Kommunikationspartner (zweites Gerät) mit dem entsprechenden öffentlichen Schlüssel oder dem entsprechenden Authentisierungszertifikat authentisiert. Entsprechendes gilt für vertauschten Rollen des ersten und des zweiten Geräts. Der eingerichtete external PSK ist damit an ein bestimmtes Authentisierungszertifikat gebunden beziehungsweise an einen bestimmten öffentlichen Schlüssel gebunden. Er wird nur dann in einer Authentisierungs- und Schlüsselvereinbarungsprotokollablauf verwendet, bei dem auch eine Authentisierung unter Nutzung des an ihn gebundenen Authentisierungszertifikats oder des an ihn gebundenen öffentlichen Schlüssels erfolgt.

Dass die Identifizierungsinformation insbesondere ausgebildet ist als mindestens ein in dem dritten digitalen Authentisierungszertifikat enthaltener öffentlicher Schlüssel, ist insbesondere in Kombination mit einem Hybrid-Zertifikat mit mehreren öffentlichen Schlüsseln für unterschiedliche kryptographische Algorithmen von Vorteil.

In einer weiteren Weiterbildung der Erfindung umfasst die zweite Authentisierung durch die zweite Authentisierungseinheit außerdem, das erste digitales Authentisierungszertifikat bereitzustellen, wobei das erste digitales Authentisierungszertifikat verwendbar ist, um eine Authentizität des ersten Geräts durch das zweite Gerät zu prüfen.

Bei der zweiten zertifikatsbasierten Authentisierung erfolgt zumindest eine Authentisierung des zweiten Geräts durch das erste Gerät (unilateral authentication). Vorzugsweise erfolgt auch eine zertifikatsbasierte Authentisierung des ersten Geräts durch das zweite Gerät (mutual authentication).

In einer weiteren Weiterbildung der Erfindung umfasst die erste Schlüsselvereinbarung durch die erste Schlüsselvereinbarungseinheit:
- den ersten Schlüssel mit dem zweiten Gerät einzurichten oder
- den ersten Schlüssel mit einem dritten Gerät einzurichten.

Der erste authentisierte Authentisierungs- und Schlüsselvereinbarungs-Protokollablauf kann direkt zwischen dem ersten Gerät, auch als erster Knoten N1 bezeichenbar, und dem zweiten Gerät, auch als zweiter Knoten N2 bezeichenbar, erfolgen, jedoch in einem zu dem zweiten Authentisierungs- und Schlüsselvereinbarungs-Protokollablauf eigenständigen Ablauf.

Ebenso ist es möglich, dass der erste authentisierte Authentisierungs- und Schlüsselvereinbarungs-Protokollablauf zwischen dem ersten Knoten N1 und einem dritten Knoten N3 (fremder Knoten) erfolgt. Der dritte Knoten N3 ist insbesondere als ein Schlüsselverwaltungsserver, auch als Key-Management-Server (ePSK KMS), ausgebildet. Dabei authentisiert sich ein Teilnehmerknoten, hier das erste Gerät, zuerst gegenüber dem KMS, bevor er den ePSK vom ihm erhält.

Der KMS kann den ePSK insbesondere zufällig generieren und den beiden Knoten N1, N2 zuordnen. Er kann jedoch auch den ePSK für die N1-N2-Kommunikation deterministisch generieren, wobei als Schlüsselableitungsparameter bzw. Schlüsselgenerierungsparameter das erste digitale Authentisierungszertifikat des Knotens N1 und das dritte digitale Authentisierungszertifikat des Knotens N2 verwendet wird. Dies hat den Vorteil, dass der KMS zustandslos realisiert werden kann, da er den Schlüssel ePSK für die N1-N2-Kommuniaktion bei Bedarf generieren kann.

In einer weiteren Weiterbildung der Erfindung ist der zweite Schlüssel ausgebildet, als ein Sitzungsschlüssels zum kryptographischen Schutz einer Kommunikation zwischen dem ersten Gerät, dem zweiten Gerät und mindestens einem vierten Gerät.

Der external PSK-Schlüssel kann dabei spezifisch für die Kommunikation zwischen ersten Knoten N1 und zweiten Knoten N2 zugeordnet sein. Es ist jedoch auch möglich, dass ein gemeinsamer external PSK Key für eine Gruppe von mehr als zwei Knoten (N1, N2, N3, ...), darunter das mindestens eine vierte Gerät, zugeordnet ist. Im letzten Fall ist der externe PSK ein Gruppenschlüssel, der von einer Mehrzahl (im Sinne von Plural, insbesondere größer als 2), bzw. einer Vielzahl von Knoten N1, N2, N3, ... verwendet wird.

Die Kommunikation zwischen dem ersten Gerät, dem zweiten Gerät und dem mindestens einem vierten Gerät umfasst insbesondere ein Übertragen von Nutzerdaten.

In einer weiteren Weiterbildung der Erfindung weist das erste Gerät außerdem auf:
- eine dritte Schlüsselvereinbarungseinheit, ausgebildet eine dritte Schlüsselvereinbarung durchzuführen, wobei die dritte Schlüsselvereinbarung umfasst, zumindest einen dritten Schlüssel einzurichten,
   wobei der dritte Schlüssel ausgebildet ist, als ein Gruppensitzungsschlüssels zum kryptographischen Schutz einer Kommunikation zwischen dem ersten Gerät, dem zweiten und dem mindestens einem vierten Gerät.

Weiterhin ist es möglich, auf den Knoten N1 aus dem eingerichteten externen PSK bei Benutzung einen weiteren externen PSK-Schlüssel abzuleiten, in den die Zertifikate (digitale Authentisierungszertifikate) bzw. der darin enthaltene public Key von N1 und/oder N2 als Ableitungsparameter eingehen. Wenn der externe PSK ein Gruppenschlüssel ist, der von einer Mehrzahl von Knoten N1, N2, N3, ... verwendet wird, hat dies den Vorteil, dass ein jeweils für eine Kommunikationsbeziehung zwischen zwei Knoten Nx und Ny spezifischer externer PSK (ePSKxy) aus dem eingerichteten ePSK abgeleitet werden kann, z.B. als ePSKxy:= KDF(ePSK, PK_Nx ∥ PK_Ny). Dabei bezeichnet ∥ die Konkatenation der beiden öffentlichen Schlüssel von Nx und Ny. Um eine eindeutige Reihenfolge von Nx und Ny zu erreichen, kann der Knoten mit dem kleineren Bezeichner oder dem kleineren öffentlichen Schlüssel als Nx bestimmt werden.

In einer weiteren Weiterbildung der Erfindung gilt für das erste Gerät, dass:
- die erste Authentisierungseinheit ausgebildet ist, die erste Authentisierung unter Nutzung eines ersten post-quantum sicherem kryptographischen Algorithmus durchzuführen und/oder
- die erste Schlüsselvereinbarungseinheit ausgebildet ist, die erste Schlüsselvereinbarung unter Nutzung eines zweiten post-quantum sicherem kryptographischen Algorithmus durchzuführen und/oder
- die zweite Authentisierungseinheit ausgebildet ist, die zweite Authentisierung unter Nutzung eines ersten klassischen asymmetrischen kryptographischen Algorithmus durchzuführen und/oder
- die zweite Schlüsselvereinbarungseinheit, ausgebildet eine zweite Schlüsselvereinbarung unter Nutzung eines zweiten klassischen asymmetrischen kryptographischen Algorithmus durchzuführen,
wobei:
- der erste und/oder der zweite post-quantum sichere kryptographische Algorithmus insbesondere ausgebildet sind als:
   o ein Gitter-basiertes Schlüsselkapselungsverfahren und/oder
   o ein Code-basiertes Schlüsselkapselungsverfahren und/oder
   o ein Kyber-Verfahren und/oder
   o ein FrodoKEM-Verfahren und/oder
   o ein Classic McEliece Verfahren und/oder
- der erste und/oder zweite klassische asymmetrische kryptographische Algorithmus insbesondere ausgebildet sind als:
   o ein Rivest-Shamir-Adleman (RSA) Verfahren und/oder
   o ein digitaler Signaturalgoritmus (Digital Signature Algorithm (DSA)) und/oder
   o ein Elliptische-Kurven Kryptographieverfahren (Elliptic-curve cryptography (ECC)) und/oder
   o ein Elliptische-Kurven digitaler Signaturalgoritmus (Elliptic Curve Digital Signature Algorithm (ECDSA)) und/oder
   o ein Diffie-Hellman Algorithmus (DH Algorithm) und/oder
   o ein Elliptische-Kurven Diffie-Hellman Verfahren (Elliptic-curve Diffie-Hellman (ECDH)).

Die Bezeichnung "post-quantum sicherer kryptographischer Algorithmus" umfasst im Sinne der Erfindung auch einen "Next-Generation kryptographischen Algorithmus".

Unter den Begriff "Schlüsselkapselungsverfahren" fällt der gebräuchliche englische Begriff "key encapsulation mechanism" (KEM). Die gilt für das Gitter-basierte und das Code-basierte Schlüsselkapselungsverfahren. Das FrodoKEM-Verfahren ist ebenfalls ein Schlüsselkapselungsverfahren.

Der erste authentisierte Authentisierungs- und Schlüsselvereinbarungs-Protokollablauf und der zweite authentisierte Authentisierungs- und Schlüsselvereinbarungs-Protokollablauf verwenden unterschiedliche kryptographische Algorithmen für die Authentisierung und Schlüsselvereinbarung. Sinnvollerweise werden für den zweiten authentisierte Authentisierungs- und Schlüsselvereinbarungs-Protokollablauf klassische kryptographische Algorithmen verwendet, für den ersten authentisierte Authentisierungs- und Schlüsselvereinbarungs-Protokollablauf dagegen sogenannte Next-Generation- oder Post-Quantum-Kryptoalgorithmen.

Dabei erfolgt vorzugsweise zwischen N1 und N2 eine PQ-sichere erste Authentisierung, insbesondere unter Nutzung einer PQ-sicheren Sicherheitsprotokolls wie PQTLS, TLSKEM oder PQ-Variante von IKEv2.

Der klassische asymmetrische kryptographische Algorithmus im ersten authentisierten Authentisierungs- und Schlüsselvereinbarungs-Protokollablauf wird insbesondere unter Nutzung von TLS1.3 oder einer Nachfolgeversion von TLS1.3 verwendet.

In einer weiteren Weiterbildung der Erfindung ist der zweite Schlüssel zum kryptographischen Schutz einer Kommunikation unter Nutzung von:
- Transport Layer Security (TLS) und/oder
- Datagram Transport Layer Security (DTLS)
ausgebildet.

Aktuell ist die Erfindung somit insbesondere zum kryptographischen Schutz einer Kommunikation unter Nutzung des Standards RFC8773 für TLS1.3 umsetzbar und anwendbar. Das TLS-Protokoll Version 1.3 unterstützt einen externen Pre-Shared-Key, d.h. dass ein außerhalb von TLS eingerichteter Pre-Shared-Key in TLS1.3 verwendet werden kann. Es ist beschrieben, dass dies wegen Post-Quantum-Sicherheit erfolgen kann, und dass dies in Kombination mit einer Zertifikats-basierten Authentisierung erfolgen kann.

RFC8773 "TLS 1.3 Extension for Certificate-Based Authentication with an External Pre-Shared Key" beschreibt die Kombination einer Zertifikats-basierten Authentisierung mit einem Pre-SHared-Key für TLS1.3.

In einer weiteren Weiterbildung der Erfindung gilt für das erste Gerät, dass:
- die erste Authentisierungseinheit ausgebildet ist, die erste Authentisierung und/oder
- die erste Schlüsselvereinbarungseinheit ausgebildet ist, die erste Schlüsselvereinbarung
angestoßen durch:
- ein periodisches Intervall und/oder
- eine Anforderung und/oder
- einen Automatismus, ausgelöst wenn der erste Schlüssel, ausgebildet als ein vorher vereinbarter geteilter symmetrischer kryptographischer Schlüssel, nicht vorliegt
durchzuführen.

Dabei ist unter der Ausführung "Automatismus, ausgelöst wenn der erste Schlüssel, ausgebildet als ein vorher vereinbarter geteilter symmetrischer kryptographischer Schlüssel, nicht vorliegt" als ein initialer Zustand zu verstehen, wenn noch kein erster authentisierter Authentisierungs- und Schlüsselvereinbarungs-Protokollablauf stattgefunden hat und der für den zweiten Authentisierungs- und Schlüsselvereinbarungs-Protokollablauf erforderliche external PSK nicht vorliegt.

In einer weiteren Weiterbildung der Erfindung weist das erste Gerät außerdem auf:
- eine Ausgabeeinheit, ausgebildet eine Signalisierungsinformation auszugeben,
   wobei die Signalisierungsinformation der ersten Authentisierung zugeordnet ist, wobei die Signalisierungsinformation angibt, dass die erste Authentisierung dazu dient, anschließend den ersten Schlüssel durch die erste Schlüsselvereinbarung einzurichten.

Dies hat den Vorteil, bei einem Verbindungsaufbau vor der ersten Authentisierung oder bei der ersten Authentisierung zu signalisieren, insbesondere durch ein Header-Feld oder ein Extension-Feld, dass diese den Zweck hat, einen external PSK einzurichten.

In einer weiteren Weiterbildung der Erfindung ist dem ersten Schlüssel eine Verwendungsrichtlinie zugeordnet, wobei die Richtlinie festlegt:
- wofür und/oder
- unter welchen Bedingungen
der ersten Schlüssel und/oder das zweite digitale Authentisierungszertifikat verwendbar ist.

Dies hat den Vorteil, dass die Verwendungsrichtlinie, auch als eine Policy-Information bezeichenbar, von dem ersten Gerät selbst ermittelbar ist (bei direkter Kommunikation). Alternativ ist die Richtlinie von einer Schlüsselverwaltungseinheit (KMS) und/oder dem zweiten Gerät zuweisbar. Die Verwendungsrichtlinie definiert, unter welchen Bedingungen, der eingerichtete externe PSK-Schlüssel benutzt werden darf.

Erfindungsgemäß gilt für die "Verwendungsrichtlinie", dass das zweite digitale Authentisierungszertifikat ausgebildet ist, in der zweiten Authentisierung von dem ersten Gerät verwendet zu werden.

Die Erfindung umfasst außerdem eine Schlüsselverwaltungseinheit, ausgebildet eine erste Authentisierung und eine erste Schlüsselvereinbarung durchzuführen,
aufweisend:
- Eine Verwaltungsauthentisierungseinheit, ausgebildet die erste Authentisierung durchzuführen, wobei die erste Authentisierung umfasst, ein erstes digitales Authentisierungszertifikat von einem ersten Gerät zu empfangen und eine Authentizität des ersten Geräts anhand des erstes digitalen Authentisierungszertifikats zu prüfen, wobei das erste digitale Authentisierungszertifikat dem ersten Gerät zugehörig ist,
- eine Verwaltungsschlüsselvereinbarungseinheit, ausgebildet die erste Schlüsselvereinbarung in Abhängigkeit eines ersten Ergebnisses der ersten Authentisierung durchzuführen, wobei die erste Schlüsselvereinbarung umfasst, einen ersten Schlüssel einzurichten,

wobei der erste Schlüssel als ein vorher vereinbarter geteilter symmetrischer kryptographischer Schlüssel ausgebildet ist, wobei dem ersten Schlüssel ein zweites digitales Authentisierungszertifikat zugehörig ist, wobei das zweite digitale Authentisierungszertifikat ausgebildet ist, in einer zweiten Authentisierung von dem ersten Gerät verwendet zu werden, wobei das zweite digitales Authentisierungszertifikat ausgebildet ist, in der zweiten Authentisierung ein zweites Gerät zu authentisieren,
wobei in Abhängigkeit eines zweiten Ergebnisses der zweiten Authentisierung eine zweite Schlüsselvereinbarung durchführbar ist, wobei die zweite Schlüsselvereinbarung umfasst, zumindest einen zweiten Schlüssel einzurichten,
wobei der zweite Schlüssel ausgebildet ist, als ein Sitzungsschlüssels zum kryptographischen Schutz einer Kommunikation zwischen dem ersten Gerät und dem zweiten Gerät.

Die Schlüsselverwaltungseinheit bildet damit die Gegenseite zum ersten Gerät für die erste Authentisierung und die erste Schlüsselvereinbarung. Die Schlüsselverwaltungseinheit ist auch als ein "Key Management Server" bezeichenbar.

Die Erfindung umfasst außerdem ein Verfahren für ein Einrichten eines zweiten Schlüssels, wobei der zweite Schlüssel ausgebildet ist als ein Sitzungsschlüssels zum kryptographischen Schutz einer Kommunikation mit einem Kommunikationspartner, mit den Schritten:
- Ein erstes Authentisieren, auch als ein Selbst-Authentisieren bezeichenbar, wobei das erste Authentisieren umfasst, ein erstes digitales Authentisierungszertifikat bereitzustellen, wobei das erste digitale Authentisierungszertifikat ein eigenes digitales Authentisierungszertifikat (des Durchführers des Verfahrens, insbesondere eines ersten Knotens und/oder eines ersten Geräts) ist, wobei das erste digitales Authentisierungszertifikat verwendbar ist, um eine Authentizität zu prüfen,
- ein erstes Schlüsselvereinbaren in Abhängigkeit eines ersten Ergebnisses des ersten Authentisierens, wobei das erste Schlüsselvereinbaren umfasst, einen ersten Schlüssel einzurichten,
   wobei der erste Schlüssel als ein vorher vereinbarter geteilter symmetrischer kryptographischer Schlüssel ausgebildet ist, wobei dem ersten Schlüssel ein zweites digitales Authentisierungszertifikat zugehörig ist, wobei das zweite digitale Authentisierungszertifikat ausgebildet ist, in einem zweiten Authentisieren (von dem Durchführer des Verfahrens) verwendet zu werden,
- das zweite Authentisieren, auch als ein Fremd-Authentisieren bezeichenbar, wobei das zweite Authentisieren umfasst, den Kommunikationspartner, insbesondere einen zweiten Knoten, durch das zweite digitales Authentisierungszertifikat zu authentisieren (insbesondere eine Authentizität des Kommunikationspartners zu prüfen), und
- ein zweites Schlüsselvereinbaren in Abhängigkeit eines zweiten Ergebnisses des zweiten Authentisierens, wobei das zweite Schlüsselvereinbaren umfasst, zumindest den zweiten Schlüssel einzurichten.

Ein Aspekt der Erfindung betrifft somit ein Verfahren aus Sicht eines ersten Knotens zum Erzeugen und Nutzen eines symmetrischen Pre-Shared Key PSK (external PSK) und ein anschließendes Verwenden des external PSK zum Erzeugen und Nutzen eines Sitzungsschlüssels für das Kommunizieren zwischen dem ersten Knoten, insbesondere einem ersten Gerät, und dem Kommunikationspartner, insbesondere einem zweiten Knoten und/oder einem zweiten Gerät.

Insbesondere ist das Verfahren verwendbar für ein Kommunizieren mit dem Kommunikationspartner geschützt durch einen zweiten Schlüssel.

Die Erfindung bietet zusammengefasst den Vorteil, dass eine effiziente, PQ-sichere hybride Authentisierung und Schlüsselvereinbarung realisiert werden kann. Die PQ-sichere Authentisierung (im Rahmen der ersten Authentisierung und ersten Schlüsselvereinbarung) muss dabei nur relativ selten oder einmalig erfolgen, um einen externen PSK-Schlüssel einzurichten, der dann bei weiteren herkömmlichen Authentisierungen und Schlüsselvereinbarungen (der zweiten Authentisierung und zweiten Schlüsselvereinbarung) lediglich als zusätzlicher Schlüssel verwendet wird.

Es kann dadurch im Gesamtsystem eine hybride Authentisierung und Schlüsselvereinbarung realisiert werden, auch wenn ein Sicherheitsprotokoll oder eine bestimmte Sicherheitsprotokollimplementierung eine hybride Authentisierung und Schlüsselvereinbarung unter Nutzung eines klassischen kryptographischen Algorithmus (zweite Authentisierung und zweite Schlüsselvereinbarung) und eines PQ-sicheren kryptographischen Algorithmus (erste Authentisierung und erste Schlüsselvereinbarung) in Kombination nicht selbst unterstützt.

Es muss also kein integriertes hybrides Authentisierungs- und Schlüsselvereinbarungsverfahren implementiert werden. Weiterhin hat dieser Ansatz den Vorteil, dass ein einzelner erster authentisierter Authentisierungs- und Schlüsselvereinbarungs-Protokollablauf für eine Mehrzahl von zweiten authentisierten Authentisierungs- und Schlüsselvereinbarungs-Protokollabläufen verwendet werden kann. Dadurch ist diese Lösung effizienter, insbesondere auf batteriebetriebenen IoT-Geräten (geringere Rechenleistung, geringere Menge zu übertragender Daten, geringerer Stromverbrauch).

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine erste Ausführung der Erfindung,
- Fig. 2: eine zweite Ausführung der Erfindung,
- Fig. 3: eine dritte Ausführung der Erfindung, und
- Fig. 4: eine vierte Ausführung der Erfindung.

### DETAILLIERTE BESCHREIBUNG DER ERFINDUNG

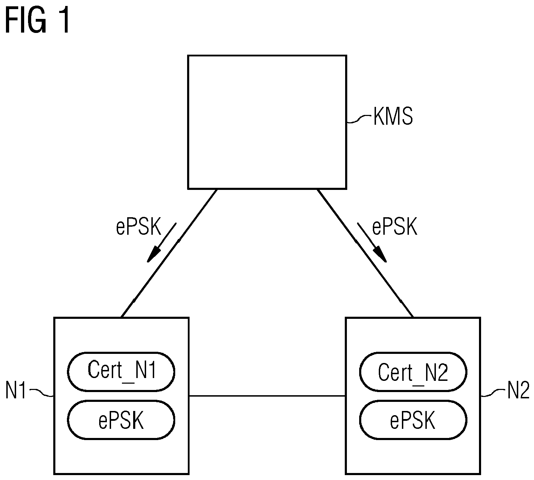

Fig. 1 zeigt ein Szenario mit einem ersten Gerät N1, insbesondere einem ersten Knoten N1, einem zweiten Gerät N2, insbesondere einem zweiten Knoten N2, und einem Key-Management-Server KMS als dritten Knoten. Der erste Schlüssel ePSK wird zumindest zwischen einem der beiden Geräte (erstes N1 und/oder zweites Gerät N2) und dem Key-Management-Server KMS vereinbart. Er steht dann dem zumindest einem der beider Geräte zur Verfügung. Es erfolgt eine gegenseitige erste Authentisierung mit dem Key-Management-Server KMS durch eine Post-Quantum-sichere Methode. Das erste Gerät N1 verwendet für seine Authentisierung das erste Zertifikat Cert_N1. Das zweite Gerät N2 verwendet für seine Authentisierung das zweite Zertifikat Cert_N2.

Anschließend erfolgt die zweite Authentisierung zwischen dem ersten Gerät N1 und dem zweiten Gerät N2. Das erste Gerät N1 verwendet für seine Authentisierung wieder das erste Zertifikat Cert_N1, das zweite Gerät N2 verwendet für seine Authentisierung wieder das zweite Zertifikat Cert_N2, zusätzlich wird der erste Schlüssel ePSK verwendet. Nach dieser zweiten Authentisierung erfolgt die Vereinbarung des Sitzungsschlüssels zwischen dem ersten Gerät N1 und dem zweiten Gerät N2. Der Sitzungsschlüssel dient dem Schutz einer Kommunikation zwischen dem ersten Gerät N1 und dem zweiten Gerät N2.

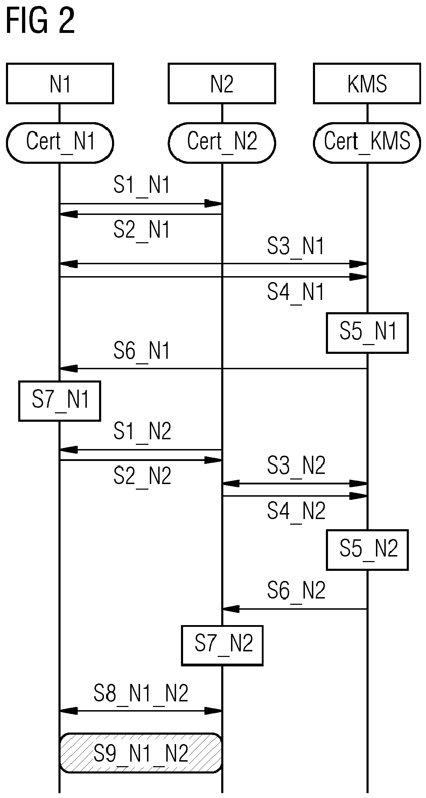

Fig. 2 zeigt einen möglichen Ablauf, bei dem ein Key Management Server KMS als dritter Knoten dem ersten Gerät N1 (Knoten N1) und dem zweiten Gerät N2 (Knoten N2), jeweils nach erfolgter Authentisierung (erster authentisierte Authentisierungs- und Schlüsselvereinbarungs-Protokollablauf), einen externen PSK-Schlüssel ePSK bereitstellt.

Konkret sind die folgenden Schritte enthalten:
S1_N1: Das erste Gerät N1 fragt beim zweiten Gerät N2 dessen Zertifikat Cert_N2 an.
S2_N1: Das erste Gerät N1 empfängt das Zertifikat Cert_N2 des zweiten Geräts N2.
S3_N1: Es erfolgt eine gegenseitige erste Authentisierung zwischen dem ersten Gerät N1 und dem Key Management Server KMS. Dafür wird ein Zertifikat Cert_N1 des ersten Geräts und ein Zertifikat Cert_KMS des Key Management Server KMS verwendet.
S4_N1: Das erste Gerät N1 fragt beim Key Management Server KMS den ersten Schlüssel ePSK an. Die Anfrage enthält eine Verknüpfung zu dem Zertifikat Cert_N2 des zweiten Geräts N2.
S5_N1: Der Key Management Server KMS erstellt den ersten Schlüssel ePSK, welcher für das erste Gerät N1 mit dem zweiten Gerät N2 bestimmt ist.
S6_N1: Der Key Management Server KMS sendet den ersten Schlüssel ePSK an das erste Gerät, insbesondere mit einer Verwendungsrichtline (Policy).
S7_N1: Das erste Gerät N1 speichert den ersten Schlüssel ePSK, welcher für das erste Gerät N1 mit dem zweiten Gerät N2 bestimmt ist.

S1_N2: Das zweite Gerät N2 fragt beim ersten Gerät N1 dessen Zertifikat Cert_N1 an.

S2_N2: Das zweite Gerät N2 empfängt das Zertifikat Cert_N1 des ersten Geräts N1.

S3_N2: Es erfolgt eine gegenseitige erste Authentisierung zwischen dem zweiten Gerät N2 und dem Key Management Server KMS. Dafür wird ein Zertifikat Cert_N2 des zweiten Geräts und ein Zertifikat Cert_KMS des Key Management Server KMS verwendet.

S4_N2: Das zweite Gerät N2 fragt beim Key Management Server KMS den ersten Schlüssel ePSK an. Die Anfrage enthält eine Verknüpfung zu dem Zertifikat Cert_N1 des ersten Geräts N1. S5_N2: Der Key Management Server KMS erstellt den ersten Schlüssel ePSK, welcher für das zweite Gerät N2 mit dem ersten Gerät N1 bestimmt ist.

S6_N2: Der Key Management Server KMS sendet den ersten Schlüssel ePSK an das zweite Gerät, insbesondere mit einer Verwendungsrichtline (Policy).

S7_N2: Das zweite Gerät N1 speichert den ersten Schlüssel ePSK, welcher für das zweite Gerät N2 mit dem ersten Gerät N1 bestimmt ist.

S8_N1_N2: Es erfolgt eine zweite Authentisierung zwischen dem ersten Gerät N1 und zweiten Gerät N2 unter Verwendung derer Zertifikate Cert_N1 und Cert_N2 und dem ersten Schlüssel ePSK. Anschließend wird der zweite Schlüssel zwischen den beiden Geräten N1, N2 vereinbart.

S9_N1_N2: Es erfolgt eine durch den zweiten Schlüssel geschützte Kommunikation zwischen dem ersten Gerät N1 und zweiten Gerät N2

Dabei erfolgt vorzugsweise gegenüber dem KMS eine PQ-sichere erste Authentisierung in den Schritten S3_N1 und/oder S3_N2, z.B. unter Nutzung einer PQ-sicheren Sicherheitsprotokolls wie PQTLS, TLSKEM oder PQ-Variante von IKEv2. Bei der zweiten Authentisierung und Schlüsselvereinbarung in Schritt S9_N1_N2 kann dagegen herkömmliches TLS1.3-Protokoll verwendet werden.

Der Key Management Server KMS kann den ersten Schlüssel ePSK z.B. zufällig generieren und den beiden Knoten N1, N2 zuordnen. Er kann jedoch auch den ersten Schlüssel ePSK für die N1-N2-Kommunikation deterministisch generieren, wobei als Schlüsselableitungsparameter bzw. Schlüsselgenerierungsparameter das Zertifikat cert_N1 des Knotens N1 und das Zertifikat cert_N2 des Knotens N2 verwendet wird. Dies hat den Vorteil, dass der Key Management Server KMS zustandslos realisiert werden kann, da er den ersten Schlüssel ePSK für die N1-N2-Kommunikation bei Bedarf generieren kann.

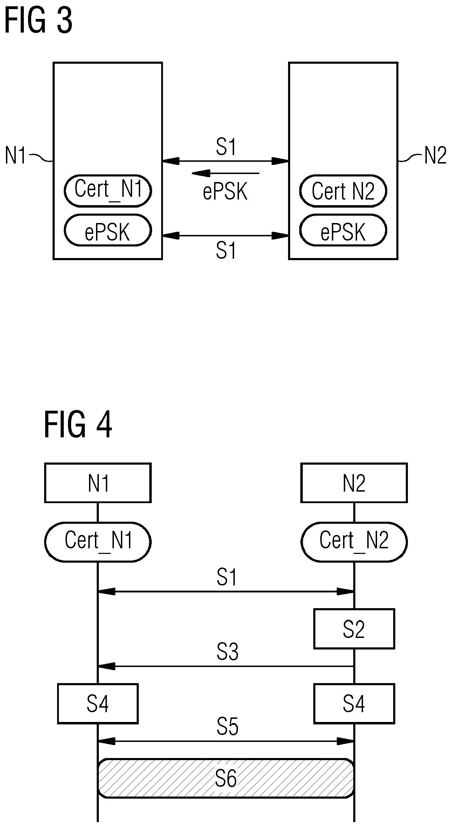

Fig. 3 zeigt ein Szenario mit einem ersten Gerät N1, insbesondere einem ersten Knoten N1, und einem zweiten Gerät N2, insbesondere einem zweiten Knoten N2. Es erfolgt eine gegenseitige erste Authentisierung S1 zwischen den beiden Geräten N1, N2 durch eine Post-Quantum-sichere Methode. Das erste Gerät N1 verwendet für seine Authentisierung S1 das erste Zertifikat Cert_N1. Das zweite Gerät N2 verwendet für seine Authentisierung S1 das zweite Zertifikat Cert_N2. Der erste Schlüssel ePSK wird zwischen den beiden Geräten (erstes Gerät N1 und/oder zweites Gerät N2) selbst vereinbart (peer-managed ePSK. Er steht dann beiden Geräten N1, N2 zur Verfügung.

Im dargestellten Beispiel generiert der zweite Knoten N2 den ersten Schlüssel ePSK und stellt ihn dem ersten Knoten N1 nach der Post-Quantum-sicheren ersten Authentisierung bereit. Alternativ (nicht dargestellt) können die Knoten N1 und N2 jeweils lokal den ePSK basierend auf dem durchgeführten Authentisierungs- und Schlüsselvereinbarungsablauf bilden.

Fig. 4 zeigt einen möglichen Ablauf, bei dem der zweite Knoten N2, nach erfolgter Authentisierung S1 (durch die Zertifikate Cert_N1, Cert_N2 der beiden Knoten), einen externen PSK-Schlüssel ePSK generiert S2 und dem ersten Knoten N1 bereitstellt S3. Dabei erfolgt vorzugsweise zwischen Knoten N1, N2 eine PQ-sichere Authentisierung S1, z.B. unter Nutzung einer PQ-sicheren Sicherheitsprotokolls wie PQTLS, TLSKEM oder PQ-Variante von IKEv2.

Der erste N1 und zweite Knoten N2 speichern S4 den externen PSK-Schlüssel ePSK.

Bei der nachfolgenden Authentisierung S5 und nachfolgenden Schlüsselvereinbarung S5 zwischen den beiden Knoten N1, N2 kann dagegen ein herkömmliches TLS1.3-Protokoll verwendet werden, d.h. ein TLS1.3-Protokoll mit einer herkömmlichen Cipher-Suite unter Nutzung herkömmlicher kryptographischer Kryptoalgorithmen wie z.B. RSA oder ECC.

Der in der nachfolgenden Schlüsselvereinbarung S5 vereinbarte zweite Schlüssel wird zum Schutz der Kommunikation zwischen den beiden Knoten N1, N2 verwendet S6.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Ein erstes Gerät (N1),
ausgebildet eine erste Authentisierung, eine erste Schlüsselvereinbarung, eine zweite Authentisierung und eine zweite Schlüsselvereinbarung durchzuführen,
wobei dem ersten Gerät (N1) ein erstes digitales Authentisierungszertifikat (Cert_N1) zugehörig ist,
aufweisend:
- Eine erste Authentisierungseinheit, ausgebildet die erste Authentisierung durchzuführen, wobei die erste Authentisierung umfasst, das erste digitale Authentisierungszertifikat (Cert_N1) bereitzustellen, wobei das erste digitales Authentisierungszertifikat (Cert_N1) verwendbar ist, um eine Authentizität des ersten Geräts (N1) zu prüfen,
- eine erste Schlüsselvereinbarungseinheit, ausgebildet die erste Schlüsselvereinbarung in Abhängigkeit eines ersten Ergebnisses der ersten Authentisierung durchzuführen, wobei die erste Schlüsselvereinbarung umfasst, einen ersten Schlüssel (ePSK) einzurichten,
wobei der erste Schlüssel (ePSK) als ein vorher vereinbarter geteilter symmetrischer kryptographischer Schlüssel ausgebildet ist, wobei dem ersten Schlüssel (ePSK) ein zweites digitales Authentisierungszertifikat zugehörig ist, wobei das zweite digitale Authentisierungszertifikat ausgebildet ist, in der zweiten Authentisierung von dem ersten Gerät (N1) verwendet zu werden,
- eine zweite Authentisierungseinheit, ausgebildet die zweite Authentisierung durchzuführen, wobei die zweite Authentisierung umfasst, ein zweites Gerät (N2) durch das zweite digitale Authentisierungszertifikat zu authentisieren,
- eine zweite Schlüsselvereinbarungseinheit, ausgebildet eine zweite Schlüsselvereinbarung in Abhängigkeit eines zweiten Ergebnisses der zweiten Authentisierung durchzuführen, wobei die zweite Schlüsselvereinbarung umfasst, zumindest einen zweiten Schlüssel einzurichten,
wobei der zweite Schlüssel ausgebildet ist, als ein Sitzungsschlüssel zum kryptographischen Schutz einer Kommunikation zwischen dem ersten Gerät (N1) und dem zweiten Gerät (N2).

2. Erstes Gerät (N1) nach Anspruch 1,
wobei die erste Authentisierungseinheit außerdem ausgebildet ist, ein positives erstes Ergebnis der ersten Authentisierung bereitzustellen, und
wobei die erste Schlüsselvereinbarungseinheit ausgebildet ist, die erste Schlüsselvereinbarung unter Voraussetzung des positiven ersten Ergebnisses durchzuführen, und/oder
wobei die zweite Authentisierungseinheit außerdem ausgebildet ist, ein positives zweites Ergebnis der zweiten Authentisierung bereitzustellen, und
wobei die zweite Schlüsselvereinbarungseinheit ausgebildet ist, die zweite Schlüsselvereinbarung unter Voraussetzung des positiven zweiten Ergebnisses durchzuführen.

3. Erstes Gerät (N1) nach einem der vorhergehenden Ansprüche, wobei die erste Authentisierung durch die erste Authentisierungseinheit umfasst, außerdem das zweite Gerät (N2) durch ein drittes digitales Authentisierungszertifikat (Cert_N2) zu authentisieren, wobei das dritte digitale Authentisierungszertifikat (Cert_N2) dem zweiten Gerät (N2) zugehörig ist.

4. Erstes Gerät (N1) nach Anspruch 3,
wobei dem ersten Schlüssel (ePSK) eine Identifizierungsinformation des zweiten Geräts (N2) zugehörig ist,
wobei die Identifizierungsinformation insbesondere ausgebildet ist als:
- das dritte digitale Authentisierungszertifikat (Cert_N2) und/oder
- ein Hash-Wert des dritten digitalen Authentisierungszertifikats (Cert_N2) und/oder
- ein Fingerprint des dritten digitalen Authentisierungszertifikats (Cert_N2) und/oder
- mindestens ein in dem dritten digitalen Authentisierungszertifikat (Cert_N2) enthaltener öffentliche Schlüssel und/oder
- ein abhängig von dem mindestens einen in dem dritten digitalen Authentisierungszertifikat (Cert_N2) enthaltenen öffentlichen Schlüssel gebildeter Hash-Wert und/oder Fingerprint.

5. Erstes Gerät (N1) nach einem der vorhergehenden Ansprüche, wobei die zweite Authentisierung durch die zweite Authentisierungseinheit außerdem umfasst, das erste digitales Authentisierungszertifikat bereitzustellen,
wobei das erste digitales Authentisierungszertifikat verwendbar ist, um eine Authentizität des ersten Geräts durch das zweite Gerät zu prüfen.

6. Erstes Gerät (N1) nach einem der vorhergehenden Ansprüche, wobei die erste Schlüsselvereinbarung durch die erste Schlüsselvereinbarungseinheit umfasst:
- Den ersten Schlüssel (ePSK) mit dem zweiten Gerät (N2) einzurichten, oder
- den ersten Schlüssel mit einem dritten Gerät (KMS) einzurichten.

7. Erstes Gerät (N1) nach einem der vorhergehenden Ansprüche, wobei der zweite Schlüssel ausgebildet ist, als ein Sitzungsschlüssels zum kryptographischen Schutz einer Kommunikation zwischen dem ersten Gerät (N1), dem zweiten Gerät (N2) und mindestens einem vierten Gerät.

8. Erstes Gerät (N1) nach Anspruch 7,
außerdem aufweisend:
- eine dritte Schlüsselvereinbarungseinheit, ausgebildet eine dritte Schlüsselvereinbarung durchzuführen, wobei die dritte Schlüsselvereinbarung umfasst, zumindest einen dritten Schlüssel einzurichten,
wobei der dritte Schlüssel ausgebildet ist, als ein Gruppensitzungsschlüssels zum kryptographischen Schutz einer Kommunikation zwischen dem ersten Gerät (N1), dem zweiten Gerät (N2) und dem mindestens einem vierten Gerät.

9. Erstes Gerät (N1) nach einem der vorhergehenden Ansprüche, wobei:
- die erste Authentisierungseinheit ausgebildet ist, die erste Authentisierung unter Nutzung eines ersten post-quantum sicherem kryptographischen Algorithmus durchzuführen und/oder
- die erste Schlüsselvereinbarungseinheit ausgebildet ist, die erste Schlüsselvereinbarung unter Nutzung eines zweiten post-quantum sicherem kryptographischen Algorithmus durchzuführen und/oder
- die zweite Authentisierungseinheit ausgebildet ist, die zweite Authentisierung unter Nutzung eines ersten klassischen asymmetrischen kryptographischen Algorithmus durchzuführen und/oder
- die zweite Schlüsselvereinbarungseinheit, ausgebildet eine zweite Schlüsselvereinbarung unter Nutzung eines zweiten klassischen asymmetrischen kryptographischen Algorithmus durchzuführen,
wobei:
- der erste und/oder der zweite post-quantum sichere kryptographische Algorithmus insbesondere ausgebildet sind als:
∘ ein Gitter-basiertes Schlüsselkapselungsverfahren und/oder
∘ ein Code-basiertes Schlüsselkapselungsverfahren und/oder
∘ ein Kyber-Verfahren und/oder
∘ ein FrodoKEM-Verfahren und/oder
∘ ein Classic McEliece Verfahren und/oder
- der erste und/oder zweite klassische asymmetrische kryptographische Algorithmus insbesondere ausgebildet sind als:
∘ ein Rivest-Shamir-Adleman Verfahren und/oder
∘ ein digitaler Signaturalgoritmus und/oder
∘ ein Elliptische-Kurven Kryptographieverfahren und/oder
∘ ein Elliptische-Kurven digitaler Signaturalgoritmus und/oder
∘ ein Diffie-Hellman Algorithmus und/oder
∘ ein Elliptische-Kurven Diffie-Hellman Verfahren.

10. Erstes Gerät (N1) nach einem der vorhergehenden Ansprüche,
wobei der zweite Schlüssel zum kryptographischen Schutz einer Kommunikation unter Nutzung von:
- Transport Layer Security und/oder
- Datagram Transport Layer Security
ausgebildet ist.

11. Erstes Gerät (N1) nach einem der vorhergehenden Ansprüche,
wobei:
- die erste Authentisierungseinheit ausgebildet ist, die erste Authentisierung und/oder
- die erste Schlüsselvereinbarungseinheit ausgebildet ist, die erste Schlüsselvereinbarung
angestoßen durch:
- ein periodisches Intervall und/oder
- eine Anforderung und/oder
- einen Automatismus, ausgelöst wenn der erste Schlüssel (ePSK), ausgebildet als ein vorher vereinbarter geteilter symmetrischer kryptographischer Schlüssel, nicht vorliegt
durchzuführen.

12. Erstes Gerät (N1) nach einem der vorhergehenden Ansprüche,
außerdem aufweisend:
- eine Ausgabeeinheit, ausgebildet eine Signalisierungsinformation auszugeben,
wobei die Signalisierungsinformation der ersten Authentisierung zugeordnet ist, wobei die Signalisierungsinformation angibt, dass die erste Authentisierung dazu dient, anschließend den ersten Schlüssel (ePSK) durch die erste Schlüsselvereinbarung einzurichten.

13. Erstes Gerät (N1) nach einem der vorhergehenden Ansprüche,
wobei dem ersten Schlüssel (ePSK) eine Verwendungsrichtlinie zugeordnet ist, wobei die Richtlinie festlegt:
- wofür und/oder
- unter welchen Bedingungen
der ersten Schlüssel (ePSK) und/oder das zweite digitale Authentisierungszertifikat verwendbar ist.

14. Schlüsselverwaltungseinheit (KMS) ausgebildet eine erste Authentisierung und eine erste Schlüsselvereinbarung durchzuführen,
aufweisend:
- Eine Verwaltungsauthentisierungseinheit, ausgebildet die erste Authentisierung durchzuführen, wobei die erste Authentisierung umfasst, ein erstes digitales Authentisierungszertifikat (Cert_N1) von einem ersten Gerät (N1) zu empfangen und eine Authentizität des ersten Geräts (N1) anhand des erstes digitalen Authentisierungszertifikats (cert_N1) zu prüfen, wobei das erste digitale Authentisierungszertifikat (Cert_n1) dem ersten Gerät (N1) zugehörig ist,
- eine Verwaltungsschlüsselvereinbarungseinheit, ausgebildet die erste Schlüsselvereinbarung in Abhängigkeit eines ersten Ergebnisses der ersten Authentisierung durchzuführen, wobei die erste Schlüsselvereinbarung umfasst, einen ersten Schlüssel (ePSK) einzurichten,
wobei der erste Schlüssel (ePSK) als ein vorher vereinbarter geteilter symmetrischer kryptographischer Schlüssel ausgebildet ist, wobei dem ersten Schlüssel (ePSK) ein zweites digitales Authentisierungszertifikat zugehörig ist, wobei das zweite digitale Authentisierungszertifikat ausgebildet ist, in einer zweiten Authentisierung von dem ersten Gerät (N1) verwendet zu werden,
wobei das zweite digitales Authentisierungszertifikat ausgebildet ist, in der zweiten Authentisierung ein zweites Gerät (N2) zu authentisieren,
wobei in Abhängigkeit eines zweiten Ergebnisses der zweiten Authentisierung eine zweite Schlüsselvereinbarung durchführbar ist, wobei die zweite Schlüsselvereinbarung umfasst, zumindest einen zweiten Schlüssel einzurichten,
wobei der zweite Schlüssel ausgebildet ist, als ein Sitzungsschlüssels zum kryptographischen Schutz einer Kommunikation zwischen dem ersten Gerät (N1) und dem zweiten Gerät (N2).

15. Verfahren für ein Einrichten eines zweiten Schlüssels, wobei der zweite Schlüssel ausgebildet ist, als ein Sitzungsschlüssels zum kryptographischen Schutz einer Kommunikation mit einem Kommunikationspartner (N2),
mit den Schritten:
- Ein erstes Authentisieren, wobei das erste Authentisieren umfasst, ein erstes digitales Authentisierungszertifikat (Cert_N1) bereitzustellen, wobei das erste digitale Authentisierungszertifikat (Cert_N1) ein eigenes digitales Authentisierungszertifikat ist, wobei das erste digitales Authentisierungszertifikat (Cert_N1) verwendbar ist, um eine Authentizität zu prüfen,
- ein erstes Schlüsselvereinbaren in Abhängigkeit eines ersten Ergebnisses des ersten Authentisierens, wobei das erste Schlüsselvereinbaren umfasst, einen ersten Schlüssel (ePSK) einzurichten,
wobei der erste Schlüssel (ePSK) als ein vorher vereinbarter geteilter symmetrischer kryptographischer Schlüssel ausgebildet ist, wobei dem ersten Schlüssel (ePSK) ein zweites digitales Authentisierungszertifikat zugehörig ist, wobei das zweite digitale Authentisierungszertifikat ausgebildet ist, in einem zweiten Authentisieren verwendet zu werden,
- das zweite Authentisieren, wobei das zweite Authentisieren umfasst, den Kommunikationspartner (N2) durch das zweite digitales Authentisierungszertifikat zu authentisieren, und
- ein zweites Schlüsselvereinbaren in Abhängigkeit eines zweiten Ergebnisses des zweiten Authentisierens, wobei das zweite Schlüsselvereinbaren umfasst, zumindest den zweiten Schlüssel einzurichten.
